(19) **Europäisches Patentamt**

**European Patent Office**

**Office européen des brevets**

(11) **EP 1 184 064 A1**

(12) **EUROPÄISCHE PATENTANMELDUNG**

(43) Veröffentlichungstag:
06.03.2002 Patentblatt 2002/10

(51) Int Cl.⁷: **B01D 9/00**, C01D 3/14

(21) Anmeldenummer: 01120324.7

(22) Anmeldetag: 24.08.2001

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.08.2000 DE 10042190**

(71) Anmelder: **Messo -Chemietechnik GmbH
47229 Duisburg (DE)**

(72) Erfinder: **Bauschlicher, Tanja
46446 Emmerich-Elten (DE)**

(74) Vertreter: **Maiwald Patentanwalts GmbH
Achenbachstrasse 43
40237 Düsseldorf (DE)**

(54) **Kristallpartikelreinigung durch Ultraschall**

(57) Um ein Verfahren zur Reinigung von Kristallpartikeln wie Kristalle anzugeben, das eine gegenüber herkömmlichen Reinigungsverfahren erhöhte Reinigungsleistung bewirkt und auch ein Herauslösen von in Hohlräume eingeschlossenen Verunreinigungen ermöglicht und das zudem in bestehende Herstellungsprozesse leicht zu integrieren ist, wird ein Verfahren zum Reinigen von Kristallpartikel vorgeschlagen, bei dem die Kristallpartikel in einer Kristallpartikel-Flüssigkeits-Suspension bereitgestellt werden, die Suspension einer Ultraschallbehandlung unterzogen wird und anschließend die Kristallpartikel durch Abtrennen aus der Suspension isoliert werden.

Fig.1

EP 1 184 064 A1

**Beschreibung**

Die vorliegende Erfindung betrifft ein Verfahren zur Reinigung von Kristallpartikeln.

Kristallpartikel, wie Kristalle sind Festkörper, die sich im thermodynamisch stabilen Zustand befinden. Sie weisen sowohl in ihrer äußeren Gestalt als auch in ihrem inneren Aufbau charakteristische, miteinander korrespondierende Systemeigenschaften auf. Die Bildung von Kristallen erfolgt durch den Vorgang der Kristallisation. Hierbei vollzieht sich ein Kristallwachstum in der Regel ausgehend von einem Keim durch Substanzanlagerung beim Abkühlen von Schmelzen, beim Abkühlen oder Eindampfen von Lösungen, durch Elektrolyse, durch Sublimation oder Abkühlung von Dämpfen und Gasen oder durch Reaktionen und Umwandlungen im festen Zustand.

Für die industrielle Herstellung von Kristallen werden Kristallisatoren verwendet, in denen Bedingungen aufrecht erhalten werden, die das Wachstum der neu entstehenden Keime oder vorgelegten Impfkristalle gewährleisten. Je nach Zweck und einzuhaltenden Wachstumsbedingungen können verschiedene Kristallisatoren unterschieden werden. So sind beispielsweise für die Kristallisation durch Abkühlen oder Eindampfen von Lösungen Lösungskristallisatoren mit Verdunstungskühlung oder Wandkühlung sowie Verdampfungs- oder Vakuumkristallisatoren aus dem Stand der Technik bekannt. Auch in der klassischen Sonnensaline wird als letzter Prozessteil eine Kristallisation des Endproduktes Sonnensalinen-Salz betrieben. Dazu wird in diesem Fall ein Salinenbecken benutzt. Gemein ist diesen vorbekannten Kristallisatoren, dass mit Beendigung des Kristallbildungsprozesses Kristalle/Kristallhaufwerke oder in Abhängigkeit von Prozeßparametern Kristallagglomerate vorliegen. Diese können dann dem Kristallisator entnommen und weiteren nachgeschalteten Prozessschritten zugeführt werden. Ein solcher nachgeschalteter Prozess ist beispielsweise der Waschprozess. Dieser dient dazu, die aus dem Kristallisator stammenden Kristalle einer mechanischen Reinigung zu unterziehen, so dass den Kristallen eventuell anhaftende Verunreinigungen vor einer Weiterverarbeitung entfernt werden.

Allerdings entstehen während des Kristallwachstums auch Hohlräume und Lücken, in die Verunreinigungen eingeschlossen werden können. Solche Verunreinigungen lassen sich Nachteiligerweise durch die Nachschaltung herkömmlicher Waschprozesse nur unvollständig wieder herauslösen. Insbesondere bei der Kristallisation aus der Lösung besteht der Nachteil, dass nicht nur ungelöste Verunreinigungen, sondern auch Teile der Mutterlösung in Hohlräumen und Lücken mit an- oder eingelagert werden können. In Abhängigkeit von der Konzentration sowie der Reinheit der Mutterlösung können sich dann zum Teil erhebliche Verunreinigungen einstellen. Diese lassen sich durch herkömmliche Waschprozesse nicht mehr herauslösen.

Hiervon ausgehend liegt der Erfindung die Aufgabe zugrunde, ein Verfahren zur Kristallpartikelreinigung anzugeben, das eine gegenüber herkömmlichen Reinigungsverfahren erhöhte Reinigungsleistung bewirkt und auch ein Entfernen von in Hohlräumen, Lücken und unzugänglichen Bereichen befindlichen Verunreinigungen ermöglicht und das zudem in bestehende Herstellungsprozesse leicht zu integrieren ist.

Zur Lösung dieser Aufgabe wird erfindungsgemäß ein Verfahren zur Reinigung von Kristallpartikeln vorgeschlagen, umfassend die Verfahrensschritte:

- Bereitstellung eines Kristallpartikel enthaltenden flüssigen Mediums;
- unterziehen des Kristallpartikel enthaltenden flüssigen Mediums zwecks Reinigung einer Ultraschallbeschallung;
- vollständiges oder teilweises Abtrennen des Verunreinigungen enthaltenden flüssigen Mediums; und
- isolieren der aufgereinigten Kristallpartikel.

Das erfindungsgemäße Verfahren betrifft insbesondere die Reinigung der aus KoKristallisationsprozessen gewonnenen Kristallpartikel von Verunreinigungen.
Kristallpartikel im Sinne dieser Erfindung umfassen insbesondere Partikel in Form von Kristallen.

Erfindungsgemäß bevorzugt lassen sich Kristallpartikel wie Alkali- und/oder Erdalkalisalze, vorzugsweise NaCl und/oder KCl aus Sonnensalinen mittels Ultraschall reinigen.

Die bei dem erfindungsgemäßen Verfahren entfernbaren Verunreinigungen umfassen feste, gasförmige und/oder flüssige Stoffe.

In wässrigen Suspensionen oder Dispersionen lassen sich bevorzugt schlecht oder unlösliche Verunreinigungen mittels Ultraschall entfernen. Hingegen ist der Effekt bei in wässrigen Suspensionen und/oder Dispersionen gut löslichen Verunreinigungen bei Anwendung von Ultraschall häufig gering, da diese Verunreinigungen bereits aufgrund ihrer guten Löslichkeit leicht in Lösung gehen. Auch bei Einschlüssen ist die Anwendung von Ultraschall zur Entfernung gutlöslicher Verbindungen ebenfalls von Vorteil. So lassen sich insbesondere Verunreinigungen, wie Einschlüsse von Gas- und/oder Flüssigkeit, mittels des erfindungsgemäßen Verfahrens entfernen.

In gleicher Weise lassen sich bei nicht wässrigen Systemen, umfassend Suspensionen und/oder Dispersionen, mittels des erfindungsgemäßen Verfahrens schlecht und/oder schwerlösliche bzw. unlösliche Verunreinigungen vorteilhaft entfernen.

Erfindungsgemäß bevorzugt ist, dass das Kristallpartikel enthaltende flüssige Medium eine wässrige oder nicht wässrige Suspension und/oder Dispersion ist.

In dem erfindungsgemäßen Verfahren bevorzugt verwendbare Kristallpartikel, wie Kristalle, können ausgewählt sein aus der Gruppe umfassend Adipinsäure, Aluminiumammoniumalaun, Aluminiumschlacke (sekundär), Amidosulfonsäure, Aminosäuren, Ammoniumchlorid, Ammoniumdihydrogenphosphat, Ammoniumdimolybdat, Ammoniumfluorid, Ammoniumhydrogencarbonat, Ammoniumnitrat, Ammoniumsulfat, Ammoniumthiosulfat, Anilin, Ascorbinsäure, Bariumchlorat, Bariumchlorid, Bariumhydroxid, Benzoesäure, Bisphenol --Addukt, Borsäure, Coffein, Coffeinhydrat, Calciumchlorid, Calciumchlorid-2-hydrat, Calciumformiat, Calciumtartrat, Caprolactam, Carnallit, Soda, Citronensäureanhydrit, Citronensäure-1-hydrat, Kupfer(II)-sulfat-5-hydrat, Kupfer(II)-chlorid, Dextrin, Dextrose, Diamoniumhydrogenphosphat, 1,4-Dichlorbenzol, Dicyandiamin, Dinatriumtetraborat, d-Lactose-1-hydrat, Dicyandiamid, Dinatriumtetraborat, d-Lactose-1-hydrat, Dimethylterephthalat, Eisensulfat-1-hydrat, Eisensulfat-7-hydrat, Fumarsäure, Gelatine, Glutaminsäure, Glucose, Halamid, Hexachlorcyclohexan, Kieserit, Lauryllactam, Lignin, Zucker, Magnesiumhexafluorosilicat-6-hydrat, Magnesiumsulfat Ammoniumsulfat, Magnesiumsulfat-7-hydrat, Maleinsäure, Malonsäure, Melamin, Methionin, Monoammoniumphosphat, Mononatriumtartrat, Nickelacetat, Nickelchlorid, Pentaerythritol, Phosphorsäure, Kaliumbromid, Kaliumcarbonat, Kaliumchlorid, Kaliumdichromat, Kaliumhydrogencarbonat, Kaliumhydroxid, Kaliumnitrat, Kaliumpermanganat, Kaliumsulfat, Salicylsäure, Siliciumdioxid, Silbernitrat, Natriumacetat, Natriumaluminat, Natriumbromid, Natriumcarbonat, Natriumchlorat, Natriumchlorid, insbesondere NaCl aus Sonnensalinen, Natriumchromat, Natriumcyanid, Natriumdichromat, Natriumdisulfit, Natriumdithionit, Natriumfluorid, Natriumformiat, Natriumglutamat, Natriumhydrogencarbonat, Natriumhydrogenfluorid, Natriumhydrogenphosphat, Natriumhydrogenphosphat-2-hydrat, Natriumhydrogensulfit, Natriumhydroxid, Natriumiodid, Natriumnitrat, Natriumnitrit, Natriumorthophosphat, Natriumperborat-4-hydrat, Natriumperchlorat, Natriumsalicylat, Natriumsulfit, Natriumsulfat, Natriumsulfat-10-hydrat, Natriumsulfat-6-hydrat, Natriumthiocyanat, Natriumthiocyanat-2-hydrat, Natriumthiosulfat, Nicotin, Sorbinsäure, Weinsäure, Kaliumtartrat, Calciumtartrat, Thioharnstoff, Thoriumnitrat, Titanylsulfat, Triammoniumphosphat, Trimellithsäure, Trinatriumphosphat, Trikaliumphosphat, Harnstoff, Zinksulfat, Zinksulfat-6-hydrat, Zinksulfat-7-hydrat, Säuren der vorgenannten Verbindungen, Salze der vorgenannten Verbindungen, Hydrate der vorgenannten Verbindungen, hydratfreie Kristallpartikel der vorgenannten Verbindungen und/oder Derivate davon.

Bevorzugt weisen 50 % der Kristallpartikel eine Partikelgröße von zwischen $\geq 30$ μm und $\leq 6$ mm, weiter bevorzugt von zwischen $\geq 100$ μm und $\leq 2$ mm und am meisten bevorzugt von $\geq 150$ μm und $\leq 1$ mm auf.

Der Gehalt der Partikel in dem flüssigen Medium das einer Ultraschallbehandlung zwecks Reinigung der Kristallpartikel ausgesetzt wird macht von zwischen $\geq 10$ Gew.-% bis $\leq 70$ Gew.-%, bezogen auf das Gesamtgewicht des Kristallpartikel enthaltenden flüssigen Mediums, aus.

Der Zeitraum der Ultraschallbehandlung ist von zwischen $\geq 0$ s und $\leq 5$ h, vorzugsweise von zwischen $\geq 10$ s und $\leq 3$ h, bevorzugt von zwischen $\geq 30$ s und $\leq 2$ h, weiter bevorzugt von zwischen $\geq 1$ min und $\leq 1$ h, noch weiter bevorzugt von zwischen $\geq 5$ min und $\leq 50$ min und am meisten bevorzugt von $\geq 10$ min und $\leq 30$ min.

Besonders bevorzugt ist, dass bei dem erfindungsgemäßen Verfahren die Kristalle in einer Kristall-Flüssigkeits-Suspension bereitgestellt werden, die Suspension einer Ultraschallbehandlung unterzogen wird und anschließend die Kristalle durch Abtrennen aus der Suspension isoliert werden.

Die erfindungsgemäße Lehre besteht mithin darin, eine Reinigung der Kristallpartikel mittels Ultraschallbehandlung durchzuführen. Anders als bei herkömmlichen Reinigungsverfahren ermöglicht die Behandlung mittels Ultraschall auch das Ablösen von in den Hohlräumen und Lücken befindlichen, gegebenenfalls sogar angebackenen Verunreinigungen. Somit kann ein gegenüber herkömmlichen Waschprozessen deutlich verbessertes Reinigungsergebnis erzielt werden. Hierbei sind zwei voneinander prinzipiell zu unterscheidende Vorgehensweisen möglich. Zum einen kann die Ultraschallbehandlung während des Herstellungsprozesses, das heißt während der Feststoffpartikelaufbereitung, beispielsweise während des Kristallwachstums, durchgeführt werden, zum anderen ist auch eine Behandlung nach Abschluss des Kristallwachstums möglich. In jedem Fall werden durch die Ultraschallbehandlung der Kristallpartikel-, insbesondere der Kristall-Flüssigkeits-Suspension, die ungewollten Einschlüsse entfernt, so dass bereits vor einer Isolation der Kristallpartikel, vorzugsweise der Kristalle, diese gereinigt sind.

Ein weiterer Vorteil dieses Reinigungsverfahrens ergibt sich dadurch, dass es auf einfache Weise in bestehende Herstellungsprozesse integrierbar ist. So kann es beispielsweise in Kombination mit bereits bestehenden Kristallisatoren eingesetzt werden. Es ist lediglich erforderlich, entsprechende Maßnahmen, wie die Anwendung von Ultraschallgeneratoren, zur Durchführung einer Ultraschallbehandlung vorzusehen; bestehende Verfahrens- und Herstellungsprozesse müssen hingegen nicht oder nur geringfügig abgeändert werden.

Insgesamt wird mit der Erfindung ein Verfahren bereitgestellt, mit dem es erstmals möglich ist, einen hohen Reinigungsgrad zu erzielen und auch Einschlüsse wirkungsvoll auszulösen.

Gemäß einem Merkmal der Erfindung wird zur Bildung der Kristall-Flüssigkeits-Suspension die Mutterlösung verwendet. Dies kann in einem separaten Verfahrensschritt im Sinne einer nachgeschalteten Reinigung durchgeführt werden. Die sich in entstehenden Hohlräumen oder Lücken ansammelnden Verunreinigungen können auf diese Weise sofort herausgelöst werden, wodurch ein hoher Endreinigungsgrad erreicht wird. Als Nebeneffekt kann mit der Ultraschallanwendung durch erhöhte Primärkeimbildung ein sehr feines Kristallisat erzeugt werden, das gleichzeitig sehr rein ist.

Gemäß einem weiteren Merkmal der Erfindung wird zur Reinigung der Kristallpartikel-, insbesondere Kristall-Flüssigkeits-Suspension, zusätzlich eine Reinigungsflüssigkeit verwendet. Diese Verfahrensalternative ist insbesondere dann von Vorteil, wenn zur Unterstützung der Reinigungswirkung eine entsprechende Eigenschaften aufweisende Reinigungsflüssigkeit eingesetzt wird. Eine solche Eigenschaft kann beispielsweise die Dichte der Flüssigkeit sein. Je nach gewählter Dichte erfahren mittels Ultraschallbehandlung herausgelöste Verunreinigungen entweder einen Auf- oder einen Abtrieb. Die Herausgelösten Verunreinigungen können mithin auf einfache Weise an der Oberfläche der Kristallpartikel-, insbesondere Kristall-Flüssigkeit-Suspension, abgeschöpft beziehungsweise vom Untergrund abgeschieden werden. Darüber hinaus können der Reinigungsflüssigkeit weitere, die Spüleigenschaften verbessernde Komponenten hinzugegeben werden, was die Reinigungswirkung insgesamt verbessert.

Gemäß einem weiteren Merkmal der Erfindung erfolgt eine Trennung von Suspension und Kristallisat mittels Ultraschallbehandlung herausgelöster Verunreinigungen durch Filtern oder Zentrifugieren. Eine derartige Behandlung kann dabei entweder kontinuierlich oder sequentiell durchgeführt werden. Bei einer kontinuierlichen Abtrennung wird während der gesamten Ultraschallbehandlung die Verunreinigungen aufweisende Suspension in einem Endlos-Kreislauf durch einen Filter geführt. Bei der sequentiellen Reinigung wird hingegen je nach Verunreinigungsgrad der Suspension bedarfsweise eine Filterung durchgeführt. Erfindungsgemäß können die Verfahren auch kombiniert werden.

Gemäß einem weiteren Merkmal der Erfindung wird die Ultraschallbehandlung wahrend, vorund/oder nach einer herkömmlicher Waschung durchgeführt. Durch die Maßnahme wird in vorteilhafter Weise eine zusätzliche Reinigungswirkung erzielt, wobei die Reinigungseigenschaft der Ultraschallbehandlung und die des mechanischen Waschens zur Erreichung eines optimierten Reinigungsergebnisses aufeinander abgestimmt werden.

Gemäß einem weiteren vorteilhaften Vorschlag der Erfindung wird die Ultraschallbehandlung zudem dazu genutzt, durch Messung der spezifischen akustischen Impedanz Z den Reinigungsgrad sowohl der zu reinigenden Kristalle als auch der Kristallsuspension zu ermitteln. Unter der spezifischen akustischen Impedanz versteht man das Verhältnis des Schalldrucks zur Teilchengeschwindigkeit. Die akustische Impedanz Z ist materialabhängig, so dass es beim Auftreffen der Schallwelle auf eine Grenzschicht, beispielsweise beim Übergang zu einem Verunreinigungen aufweisenden Hohlraum, zu einer Aufspaltung in eine transmittierte und eine reflektierte Welle kommt. Durch die Verwendung geeigneter Sensoren können sowohl transmittierte als auch reflektierte Wellen zur Auswertung erfasst werden.

Die Ultraschallbehandlung der Kristallpartikel-, insbesondere der Kristallsuspension, gemäß des erfindungsgemäßen Reinigungsverfahrens bewirkt eine nicht nur oberflächliche Reinigung der Kristallpartikel, beispielsweise der Kristalle, sondern ermöglicht auch das Ablösen von Verunreinigungen aus Hohlräumen und Lücken, die während des Kristallwachstums entstehen. Mithin kann unter Anwendung des erfindungsgemäßen Verfahrens ein gegenüber herkömmlichen Waschverfahren erhöhter Reinigungsgrad erzielt werden. Dabei kann das erfindungsgemäße Verfahren auf einfache Weise in bestehende Herstellungsprozesse integriert und vorzugsweise auch zusammen mit herkömmlichen Kristallisatoren eingesetzt werden.

Weitere Vorteile und Merkmale der Erfindung ergeben sich aus der nachfolgenden Beschreibung anhand der Figuren. Dabei zeigen:

Fig. 1    Blockschaltbild über den prinzipiellen Verfahrensablauf der Kristallisation; und

Fig. 2    in einer Prinzipskizze die Funktionsweise eines Wascheindickers.

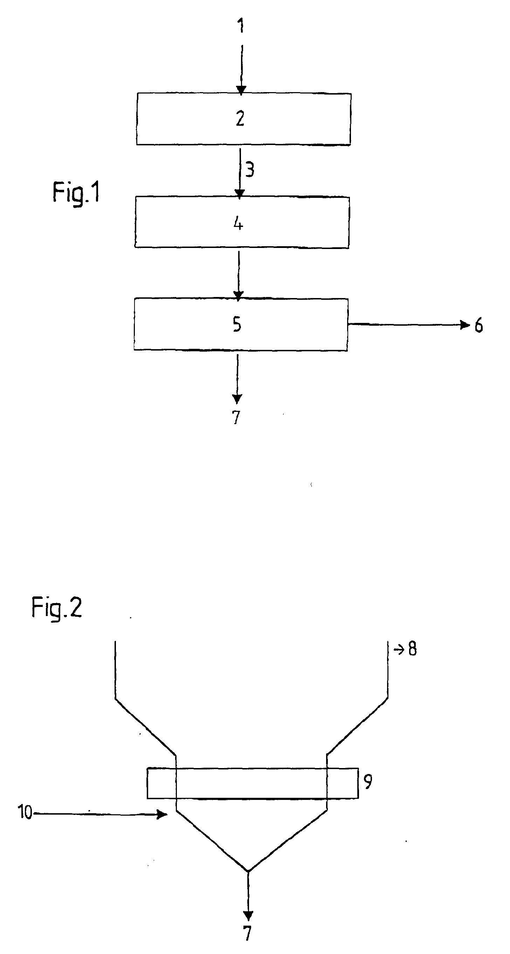

Fig. 1 zeigt in Form eines Blockdiagramms den schematischen Ablauf eines Kristallisationsvorgangs, wobei hier die Kristallisation aus einer Lösung dargestellt ist. Die gesättigte Mutterlösung ist mit 1 bezeichnet. Sie wird in einem ersten Arbeitsschritt in den Kristallisator gegeben. Dieser kann beispielsweise ein Lösungskristallisator mit Verdunstungs- oder Wandkühlung sein. Im Ergebnis liefert der Prozess 7 isolierte Kristalle in den individuellen Verfahrensbedingungen entsprechenden Korngrößen.

Die Bildung von Kristallen erfolgt durch den Vorgang der Kristallisation 2. Hierbei vollzieht sich ein Kristallwachstum in der Regel ausgehend von einem Keim durch Substanzanlagerung beim Abkühlen/Eindampfen o. ä. der Lösung. Im Falle eines Lösungskristallisators mit Verdunstungskühlung, z. B. dem Kristallisator in einer Sonnensaline, wird diese Kühlung durch Verdunstung des Lösungsmittels bei natürlicher oder Zwangskonvektion von Luft erreicht. Während des Kristallwachstums entstehen Hohlräume und Lücken. In diesen sammelt sich zum einen Mutterlösung an, als auch zum anderen ungelöste Verunreinigungen. Nach Abschluss des Kristallwachstums können diese Verunreinigungen durch herkömmliche Reinigungsverfahren nicht wirkungsvoll entfernt werden.

Erfindungsgemäß ist daher vorgesehen, die Kristallsuspension 3 einer Ultraschallbehandlung 4 zu unterziehen. Anders als bei herkömmlichen Reinigungsverfahren ermöglicht die Ultraschallbehandlung das Herauslösen eben dieser in den Hohlräumen und Lücken abgelagerten Verunreinigungen. Hierdurch kann ein deutlich verbessertes Reinigungsergebnis erzielt werden. Nach Abschluss einer erfolgten Ultraschallbehandlung 4 kann sodann ein Trennvorgang 5 durchgeführt werden, mit dem isolierte Kristalle 7 und die verbleibende Mutterlösung 6 voneinander getrennt werden. Die Mutterlösung 6 kann zur Bildung neuer Kristalle verwandt und dem Prozess erneut zugeführt werden.

Fig. 2 zeigt beispielhaft einen Wascheindicker. Wesentlich hierbei ist, dass bei 9 eine Ultraschallbehandlung durchgeführt wird. Im Zuge der kontinuierlichen Kristallherstellung und-reinigung sind eine permanente Zuführung von Frischlösung 10 sowie ein entsprechender Überlauf 8 vorgesehen. Eine Abtrennung der Kristalle erfolgt bei 7.

Weitere vorteilhafte Ausgestaltungen der vorliegenden Erfindung sind in den nachfolgenden Beispielen 1 - 5 angegeben.

Beispiel 1

Es wurden 250 g einer grobkristallinen, farblosen, wenige schwarze Stippen aufweisenden NaCl-Salinenrohsalzprobe (Herkunft Nyanza Mines, Tansania) mit 750 g (der dreifachen Menge) einer bei Raumtemperatur gesättigten $NaCl/CaSO_4$ Lösung in einem 1000 ml Becherglas vermischt und 15 min bei 20 °C mit einem Balkenrührer gerührt. Nach Abstellen des Rührers und einer anschließenden Sedimentationszeit von 20 s wird die überstehende, trübe Flüssigkeit abgesaugt. Die Trennung der verbleibenden Suspension in Mutterlösung und Kristallisat wurde mit Hilfe einer Siebtrommelzentrifuge (Hermle Labortechnik Typ: Sieva) mit einem Trommelinnendurchmesser von 140 mm über 2 min (t=2) bei einer Umdrehung von 6000 min⁻¹ (U=6000 min⁻¹) unter Verwendung eines Filterpapiers 1001, erhältlich bei der Firma Schleicher und Schuell, durchgeführt.

Beispiel 2

Es wurden 250 g einer zerkleinerten, farblosen, wenige schwarze Stippen aufweisenden NaCl-Salinenrohsalzprobe[1] (Herkunft Nyanza Mines, Tansania) mit 750 mg (der dreifachen Menge) einer bei Raumtemperatur gesättigten $NaCl/CaSO_4$ Lösung in einem 1000 ml Becherglas vermischt und 15 min bei 20 °C mit einem Balkenrührer gerührt. Nach Abstellen des Rührers und einer anschließenden Sedimentationszeit von 20 s wird die überstehende, trübe Flüssigkeit abgesaugt. Die Trennung der verbleibenden Suspension in Mutterlösung und Kristallisat wurde mit Hilfe einer Siebtrommelzentrifuge (Hermle Labortechnik Typ: Sieva) mit einem Trommelinnendurchmesser von 140 mm über 2 min (t=2) bei einer Umdrehung von 6000 min⁻¹ (U=6000 min⁻¹) unter Verwendung eines Filterpapiers 1001, erhältlich bei der Firma Schleicher und Schuell, durchgeführt.

Beispiel 3

Es wurden 250 g einer grobkristallinen, farblosen, wenige schwarze Stippen aufweisenden NaCl-Salinenrohsalzprobe (Herkunft Nyanza Mines, Tansania) mit 750 g (der dreifachen Menge) einer bei Raumtemperatur gesättigten $NaCl/CaSO_4$ Lösung in einem 1000 ml Becherglas vermischt und 15 min bei 20 °C mit einem Balkenrührer gerührt. Die Ultraschallbehandlung 35 KHz (Ultraschallbad 2 x 240 Watt/Per Firma: Haver & Boecker) erfolgt während der gesamten Waschdauer. Nach Abstellen des Rührers und des Ultraschallbades und einer anschließenden Sedimentationszeit von 20 s wird die überstehende, trübe Flüssigkeit abgesaugt. Die Trennung der verbleibenden Suspension in Mutterlösung und Kristallisat wurde mit Hilfe einer Siebtrommelzentrifuge (Hermle Labortechnik Typ: Sieva) mit einem Trommelinnendurchmesser von 140 mm über 2 min (t=2) bei einer Umdrehung von 6000 min⁻¹ (U=6000 min⁻¹) unter Verwendung eines Filterpapiers 1001, erhältlich bei der Firma Schleicher und Schuell, durchgeführt.

Beispiel 4

Es wurden 250 g einer zerkleinerten, farblosen, wenige schwarze Stippen aufweisenden NaCl-Salinenrohsalzprobe[1] (Herkunft Nyanza Mines, Tansania) mit 750 g (der dreifachen Menge) einer bei Raumtemperatur gesättigten $NaCl/CaSO_4$ Lösung in einem 1000 ml Becherglas vermischt und 15 min bei 20 °C mit einem Balkenrührer gerührt. Die Ultraschallbehandlung 35 KHz (Ultraschallbad 2 x 240 Watt/Per Firma: Haver & Boecker) erfolgt während der gesamten Waschdauer. Nach Abstellen des Rührers und des Ultraschallbades und einer anschließenden Sedimentationszeit von 20 s wird die überstehende, trübe Flüssigkeit abgesaugt. Die Trennung der verbleibenden Suspension in Mutterlösung und Kristallisat wurde mit Hilfe einer Siebtrommelzentrifuge (Hermle Labortechnik Typ: Sieva) mit einem Trommelinnendurchmesser von 140 mm über 2 min (t=2) bei einer Umdrehung von 6000 min⁻¹ (U=6000 min⁻¹) unter Verwendung eines Filterpapiers 1001, erhältlich bei der Firma Schleicher und Schuell, durchgeführt.

[1] = Eine Teilmenge der grobkristallinen, farblosen, wenige schwarze Stippen aufweisende NaCl-Salinenrohsalzprobe (Herkunft Nyanza Mines, Tansania) gemäß Beispiel 1 wurde mit Hilfe einer Schlagrotormühle (Siebeinsatz 4mm, 2800 U/min) zerkleinert und homogenisiert.

Beispiel 5

Es wurden 250 g einer grobkristallinen, farblosen, wenige schwarze Stippen aufweisenden NaCl-Salinenrohsalzprobe (Herkunft Nyanza Mines, Tansania) mit 750 g (der dreifachen Menge) einer bei Raumtemperatur gesättigten NaCl Lösung in einem 1000 ml Becherglas vermischt und 15 min bei 20 °C mit einem Balkenrührer gerührt. Nach Abstellen des Rührers und einer anschließenden Sedimentationszeit von 20 s wird die überstehende, trübe Flüssigkeit abgesaugt. Die Trennung der verbleibenden Suspension in Mutterlösung und Kristallisat wurde mit Hilfe einer Siebtrommelzentrifuge (Hermle Labortechnik Typ: Sieva) mit einem Trommelinnendurchmesser von 140 mm über 2 min (t=2) bei einer Umdrehung von 6000 min$^{-1}$ (U=6000 min$^{-1}$) unter Verwendung eines Filterpapiers 1001, erhältlich bei der Firma Schleicher und Schuell, durchgeführt.

Das gemäß der Beispiele 1 bis 4 erhaltene Kristallisat wurden bei 110°C getrocknet und analysiert auf:

| Parameter | Methode |
|---|---|
| $H_2O$-Unlösliches | Filtration der aufgelösten Probe über einen G4-Glasfiltertiegel (Porengröße 4-16 μm) Waschung des Rückstandes, Trocknung bei 105°C |
| $Ca^{2+}$ | komplexometrisch |
| $SO_4^{2-}$ | gravimetrisch |

Das gemäß der Beispiele 1, 3 und 5 erhaltene Kristallisat wurden bei 110°C getrocknet und analysiert auf:

| Weißgrad | Getrocknet bei 105 °C, 1,5 h, gemörsert < 125 μm, vermessen mit Dr. Lange - Gerät |
|---|---|

Der NaCl-Anteil im getrockneten Salz ist wie folgt bestimmt worden:

$$c_{NaCl} = 100 - \Sigma Verunreinigungen\ [\%]$$

Der Abreicherungsfaktor $\alpha$ ist wie folgt definiert:

$$\alpha = 1 - \frac{C_{aus}}{C_0}\ [\%]$$

Die folgende Tabelle I zeigt eine Übersicht der Abreicherungsfaktoren $\alpha$:

| | unzerkleinert | | zerkleinert | |
|---|---|---|---|---|
| | Beispiel 1 | Beispiel 3 | Beispiel 2 | Beispiel 4 |
| Solarsalz | Gew. mit NaCl / $CaSO_4$ ohne Ultraschall $\alpha$ [%] | Gew. mit NaCl / $CaSO_4$ mit Ultraschall $\alpha$ [%] | Gew. mit NaCl / $CaSO_4$ ohne Ultraschall $\alpha$ [%] | Gew. mit NaCl / $CaSO_4$ mit Ultraschall $\alpha$ [%] |
| Unlösliches [%] | 21 | 32 | 30 | 39 |
| Calcium $Ca^{2+}$ [%] | 18 | 26 | 29 | 37 |
| Sulfat $SO_4^{2+}$ [%] | 17 | 25 | 27 | 36 |

Die Tabelle I zeigt, dass die Abtrennung der unlöslichen Bestandteile aus dem Rohsalz bei Waschung mit NaCl / $CaSO_4$-gesättigter Lösung durch die Anwendung von Ultraschall um 9 % im zerkleinerten Rohsalz oder um 11 % im unzerkleinerten Rohsalz gesteigert werden kann.

Bei Calcium lässt sich durch die Anwendung von Ultraschall bei Waschung mit NaCl / $CaSO_4$-gesättigter Lösung eine Abreicherung von 8 % sowohl im zerkleinerten Rohsalz als auch im unzerkleinerten Rohsalz erreichen.

Bei Sulfat lässt sich durch die Anwendung von Ultraschall bei Waschung mit NaCl / $CaSO_4$-gesättigter Lösung eine Abreicherung um 9 % im zerkleinerten Rohsalz oder 8 % im unzerkleinerten Rohsalz erreichen.

Die Ergebnisse der Weißgradmessung mit unzerkleinerten Salz nach Waschung sind in der Tabelle II wiedergegeben.

Tabelle II

| Weißgradmessung | |
|---|---|
| | *Weißgrad nach Berger $W_b$* |
| Beispiel 1 gewaschen mit NaCl/CaSO$_4$ ohne Ultraschall | 73,8 |
| Beispiel 3 gewaschen mit NaCl/CaSO$_4$ mit Ultraschall | 81,7 |
| Beispiel 5 gewaschen mit NaCl ohne Ultraschall | 79,0 |

Die Ergebnisse der Tabelle II zeigen deutlich, dass sich der Weißgrad des gewaschenen Salzes durch die Anwendung von Ultraschall steigern lässt.

Zusammenfassend lässt sich feststellen, dass

- der ausschwemmbare Anteil der unlöslichen Bestandteile im unzerkleinerten sowie zerkleinerten Solarsalz durch die Ultraschallanwendung gesteigert werden kann;
- ein Teil der unlöslichen Bestandteile, die an der Kristalloberfläche anhaften, durch die Ultraschallanwendung abgesprengt werden können;
- durch Absprengung der ausschwemmbare Gipsanteil durch Ultraschallanwendung gesteigert werden kann;
- der Weißgrad bei grobkristallinem Salz durch Ultraschallanwendung verbessert werden kann;
- auch bei zerkleinertem Salz durch Einsatz von Ultraschall die Salzqualität verbessert werden kann;
- die Korngrößenverteilung durch Ultraschall nicht oder nicht wesentlich beeinflusst wird.

Bezugszeichenliste

| | |
|---|---|
| **1** | Lösung |
| **2** | Kristallisation |
| **3** | Kristallsuspension |
| **4** | Ultraschallbehandlung |
| **5** | Trennung |
| **6** | Mutterlösung |
| **7** | Kristalle |
| **8** | Überlauf |
| **9** | Ultraschallbehandlung |
| **10** | Frischlösung |

**Patentansprüche**

1. Verfahren zur Reinigung von Kristallpartikeln von Verunreinigungen, umfassend die Verfahrensschritte:

   - Bereitstellung eines Kristallpartikel enthaltenden flüssigen Mediums;
   - unterziehen des Kristallpartikel enthaltenden flüssigen Mediums zwecks Reinigung einer Ultraschallbeschallung;
   - vollständiges oder teilweises Abtrennen des Verunreinigungen enthaltenden flüssigen Mediums; und
   - isolieren der aufgereinigten Kristallpartikel.

2. Verfahren nach Anspruch 1, **dadurch gekennzeichnet, dass** das Kristallpartikel enthaltende flüssige Medium eine wässrige oder nicht wässrige Suspension oder Dispersion ist.

3. Verfahren nach Anspruch 1 oder 2,

**dadurch gekennzeichnet, dass** die Kristallpartikel, insbesondere in Form von Kristallen, in dem flüssigen Medium enthalten sind.

4. Verfahren nach einem der vorherigen Ansprüche,
   **dadurch gekennzeichnet, dass** Kristalle in einer Kristall-Flüssigkeits-Suspension bereitgestellt werden, die Suspension einer Ultraschallbehandlung unterzogen wird und anschließend die Kristalle durch Abtrennen aus der Suspension isoliert werden.

5. Verfahren nach einem der vorherigen Ansprüche,
   **dadurch gekennzeichnet, dass** zur Bildung der Kristall-Flüssigkeits-Suspension die Mutterlösung verwendet wird.

6. Verfahren nach einem der vorherigen Ansprüche,
   **dadurch gekennzeichnet, dass** zur Bildung der Kristall-Flüssigkeits-Suspension eine Reinigungsflüssigkeit verwendet wird.

7. Verfahren nach einem der vorherigen Ansprüche, **dadurch gekennzeichnet, dass** ein Abtrennen der Kristalle aus der Suspension durch Filtern erfolgt.

8. Verfahren nach einem der vorherigen Ansprüche,
   **dadurch gekennzeichnet, dass** die Ultraschallbehandlung bei einer Frequenz größer gleich 20 kHz durchgeführt wird.

9. Verfahren nach einem der vorherigen Ansprüche,
   **dadurch gekennzeichnet, dass** die Ultraschallbehandlung während, vor- und/oder nach einem Waschvorgang, vorzugsweise mechanischem Waschvorgang, durchgeführt wird.

10. Verfahren nach einem der vorherigen Ansprüche,
    **dadurch gekennzeichnet, dass** durch Messung der spezifischen akustischen Impedanz Z der Verunreinigungsgrad der Kristalle ermittelt wird.

Fig.1

Fig.2

**Europäisches Patentamt**

## EUROPÄISCHER RECHERCHENBERICHT

Nummer der Anmeldung

EP 01 12 0324

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | SU 1 611 863 A (UNIV DNEPROPETROWSK) 7. Dezember 1990 (1990-12-07) * das ganze Dokument * & DATABASE WPI Derwent Publications Ltd., London, GB; AN 1991-244302 "Purification of salt solutions from heavy metals" * Zusammenfassung * | 1-4,6,8 | B01D9/00 C01D3/14 |
| A | DATABASE WPI Derwent Publications Ltd., London, GB; AN 1993-132219 XP002183240 CHMILENKO F.A: "Method of determination of mercury" & SU 1 730 575 A (UNIV DNEPROPETROWSK), 30. April 1992 (1992-04-30) * Zusammenfassung * | 1 | |
| A | EP 0 458 403 A (AKZO NV) 27. November 1991 (1991-11-27) * das ganze Dokument * | 1 | **RECHERCHIERTE SACHGEBIETE (Int.Cl.7)** B01D C01D |
| A | WO 98 03241 A (KREBS SWISS KREBS & CO AG ;SEDIVY VLADIMIR MICHAEL (CH); CHROMEC P) 29. Januar 1998 (1998-01-29) * das ganze Dokument * | 1 | |

Der vorliegende Recherchenbericht wurde für alle Patentansprüche erstellt

| Recherchenort | Abschlußdatum der Recherche | Prüfer |
|---|---|---|
| DEN HAAG | 4. Dezember 2001 | Hilt, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 01 12 0324

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-12-2001

| Im Recherchenbericht angeführtes Patentdokument | | Datum der Veröffentlichung | Mitglied(er) der Patentfamilie | | Datum der Veröffentlichung |
|---|---|---|---|---|---|
| SU 1611863 | A | 07-12-1990 | SU | 1611863 A1 | 07-12-1990 |
| SU 1730575 | A | 30-04-1992 | SU | 1730575 A1 | 30-04-1992 |
| EP 0458403 | A | 27-11-1991 | US | 5068092 A | 26-11-1991 |
| | | | AU | 627977 B2 | 03-09-1992 |
| | | | AU | 7723091 A | 21-11-1991 |
| | | | DE | 69111301 D1 | 24-08-1995 |
| | | | DE | 69111301 T2 | 04-04-1996 |
| | | | EP | 0458403 A2 | 27-11-1991 |
| | | | ES | 2075930 T3 | 16-10-1995 |
| WO 9803241 | A | 29-01-1998 | CH | 690840 A5 | 15-02-2001 |
| | | | AT | 201329 T | 15-06-2001 |
| | | | AU | 720656 B2 | 08-06-2000 |
| | | | AU | 3333397 A | 10-02-1998 |
| | | | WO | 9803241 A1 | 29-01-1998 |
| | | | DE | 59703607 D1 | 28-06-2001 |
| | | | EP | 0912216 A1 | 06-05-1999 |
| | | | ES | 2159870 T3 | 16-10-2001 |
| | | | TR | 9900092 T2 | 21-05-1999 |

EPO FORM P0461

Für nähere Einzelheiten zu diesem Anhang : siehe Amtsblatt des Europäischen Patentamts, Nr.12/82